(19) Europäisches Patentamt
European Patent Office
Office européen des brevets

(11) Publication number: 0 400 703 A1

# (12) EUROPEAN PATENT APPLICATION

(21) Application number: 90201214.5

(22) Date of filing: 15.05.90

(51) Int. Cl.5: C09J 167/00, C08K 5/00, C08L 67/00, B32B 27/36

(30) Priority: 24.05.89 NL 8901296

(43) Date of publication of application: 05.12.90 Bulletin 90/49

(84) Designated Contracting States: BE DE ES FR GB IT NL

(71) Applicant: AKZO N.V.
Velperweg 76
NL-6824 BM Arnhem(NL)

(72) Inventor: Bootsma, Jan Petrus Clementius
t'Biezenweitje 4
NL-6932 HJ Westervoort(NL)
Inventor: Tintel, Cornelis
Oostereind 17
NL-7843 PG Erm(NL)

(74) Representative: Schalkwijk, Pieter Cornelis
Akzo Patents Department P.O. Box 93 00
Velperweg 76
NL-6800 SB Arnhem(NL)

## (54) Adhesive based on a thermoplastic polyester with an aluminium compound incorporated therein.

(57) Disclosed is an adhesive based on a thermoplastic polyester composition and an organo-aluminium compound, wherein the aluminium compound is an aluminium chelate with at least one ligand displaying keto-enol tautomerism, which compound is melt incorporated into the polyester. The adhesive is used between a support layer, a barrier layer of an ethylene-vinyl alcohol copolymer film and a (co)polyester film to form a laminated product in the form of a container, especially a bottle.

EP 0 400 703 A1

Xerox Copy Centre

## Adhesive based on a thermoplastic polyester with an aluminium compound incorporated therein

The invention relates to an adhesive based on a thermoplastic polyester composition and an organo-aluminium compound, this adhesive's use as adhesive layer between a (co)polyester film and an ethylene-vinyl alcohol copolymer film, a laminated product composed of a support layer, an adhesive layer, and a barrier layer, a process for the manufacture of such a laminated product in the form of a container, and such a container in the form of a bottle.

An adhesive based on a thermoplastic polyester composition was earlier proposed in US Patent Specification 4 496 714.

The adhesive described in this patent specification is obtained by an organo-aluminium compound being incorporated into the reaction medium during the preparation of the polyester - preferably following the transesterification reaction.

A drawback to the preparative process described in said patent specification is that due to the presence of the trivalent aluminium cross-linking will occur, which may cause gelation of the reaction mixture. To prevent such gelation esters of monocarboxylic acids are added as chain terminators.

Although compositions having very satisfactory adhesive properties can be obtained using this known preparative process, in actual practice there is great need for an adhesive that can be obtained by a less complicated preparative technique, thus reducing the chance of the reactor being contaminated and making more flexible operation possible.

The invention now provides an adhesive with which the drawbacks to the known adhesive have for the most part been overcome.

The invention consists in that in the adhesive of the known type mentioned in the opening paragraph the aluminium compound is an aluminium chelate with at least one ligand displaying keto-enol tautomerism, which compound is melt-incorporated into the polyester in an amount of 0,2 to 5% by weight, calculated on the polyester composition-aluminium compound combination.

Surprisingly, the adhesives according to the present invention can be obtained by simple melt mixing without any gelation occurring. An additional advantage is that, since no chain terminator needs to be added the viscosity and thus the quality of the end product will be more readily controllable.

The adhesives according to the present invention not only have a more readily adjustable melt viscosity, in general they also have a higher melt strength, while their mechanical strength and clarity are comparable with those of the known adhesives.

It has been found that an adhesive of very high quality is obtained when 0,3 to 3% by weight of the aluminium compound is melt-incorporated into the polyester composition.

It is found that optimum results are obtained with an adhesive consisting of a polyester composition into which 0,5-1,5% by weight of the aluminium compound have been melt-incorporated.

Suitable aluminium compounds according to the invention contain at least one ligand displaying keto-enol tautomerism. These compounds are prepared in a manner analogous to that described in the aforementioned US patent specification, with, according to the present invention, the reaction component used advantageously being a compound of the formula $R_1COCH_2COR_2$, wherein $R_1$ and $R_2$ may be the same or different and represent a methyl, benzyl or alkoxy group having 1 to 10 carbon atoms.

It has been found that very favourable results can be obtained when in the preparation of the adhesives according to the invention use is made of an aluminium acetylacetonate or an aluminium acetate bis(ethyl acetoacetate). Examples of aluminium compounds with an acetylacetonate ligand or an ethyl acetoacetate ligand include:

aluminium isopropyl bis(acetylacetonate)
aluminium acetate bis(acetylacetonate)
aluminium diacetate mono-acetylacetonate
aluminium acetate bis(ethyl acetoacetate)

Optimum results have so far been obtained using aluminium tris(acetylacetonate).

The thermoplastic polyester compositions that may be used according to the invention include all polyester compositions conceivable, providing that they have a softening point of at least 150 °C, are sufficiently clear, and have such a colour as will not adversely affect the quality of the end product to be treated with the adhesive. Preference is given in this case to a thermoplastic polyester composition which consists for 50-100% by weight of a polyester of the formula:

$$-ODO\overset{O}{\overset{\|}{C}}R\overset{O}{\overset{\|}{C}}-,$$

wherein D represents a divalent radical left after removal of terminal hydroxyl groups from at least one diol

having a molecular weight of less than 250, R represents a divalent radical left after removal of carboxyl groups from at least one carboxylic acid having a molecular weight of less than 300, at least 70 mole % of the used dicarboxylic acid is terephthalic acid or the ester-forming equivalents thereof and at least 70 mole % of the diol is ethylene glycol, 1,3- propane diol, or 1,4-butane diol, or the ester-forming equivalents thereof, and the sum of the mole percentages of the dicarboxylic acid which is not terephthalic acid or an ester-forming equivalent thereof and of the diol which is not ethylene glycol, 1,3- propane diol or 1,4-butane diol, or an ester-forming equivalent thereof does not exceed 30.

Diols with a molecular weight of less than 250 that may be used in addition to ethylene glycol and 1,3- or 1,4-propane diol include acyclic, alicyclic, and aromatic dihydroxy compounds.

Preference is given to diols having 2-15, more particularly 5-10 carbon atoms, such as ethylene glycol, propylene glycol, isobutylene glycol, pentamethylene glycol, 2,2-dimethyltrimethylene glycol, hexamethylene glycol, and decamethylene glycol, dihydroxycyclohexane. resorcinol, hydroquinone, and 1,5-dihydroxynaphthalene.

More particularly preferred are aliphatic diols containing 2-8 carbon atoms. Bisphenols suitable for use include bis(p-hydroxy)diphenyl, bis(p-hydroxyphenyl)methane, and bis(p-hydroxyphenyl)propane.

Dicarboxylic acids with a molecular weight of not more than 300 that may be used in addition to terephthalic acid include aliphatic, cycloaliphatic, or aromatic dicarboxylic acids.

The term aliphatic dicarboxylic acids as used in the description of the invention refers to carboxylic acids with two carboxyl groups each bonded to a saturated carbon atom.

If the carbon atom to which the carboxyl group is bonded is saturated and part of a ring, the acid is a cycloaliphatic acid. Often it is not possible to make use of aliphatic and cycloaliphatic acids having conjugated unsaturation due to their tendency to homopolymerization. However, it is possible to use some unsaturated acids such as maleic acid. Aromatic dicarboxylic acids as defined according to the invention are dicarboxylic acids having two carboxyl groups bonded to a carbon atom in a separate or a condensed benzene ring. It is not necessary for the two functional carboxyl groups to be bonded to the same aromatic ring, in which case, if there is more than one ring, the rings can be interlinked by aliphatic or aromatic divalent groups, or by divalent groups such as -O- or $-SO_2$

As representative examples of aliphatic and cycloaliphatic acids that may be used in the invention may be mentioned sebacic acid, 1,3-cyclohexane dicarboxylic acid, 1,4-cyclohexane dicarboxylic acid, adipic acid, glutaric acid, succinic acid, carbonic acid, oxalic acid, azelaic acid, diethyl-malonic acid, allyl-malonic acid, 4-cyclohexane-1,2-dicarboxylic acid, $\alpha,\alpha^1,\beta,\beta^1$-tetramethyl succinic acid, cyclopentane-dicarboxylic acid, decahydro-1,5-naphthalene-dicarboxylic acid, $4,4^1$-dicyclohexyl dicarboxylic acid, decahydro-2,6-naphthalene dicarboxylic acid, $4,4^1$-methylene-bis(cyclohexyl carboxylic acid), 3,4-furan dicarboxylic acid, and 1,1-cyclobutane dicarboxylic acid. Preferred aliphatic and cycloaliphatic acids are cyclohexane-dicarboxylic acids and adipic acid.

Representative aromatic dicarboxylic acids that may be used include phthalic acid and isophthalic acid, bibenzoic acid, substituted dicarboxy compounds with two benzene nuclei, such as bis(p-carboxyphenyl)-methane, p-oxy(p-carboxyphenyl)-benzoic acid, ethylene bis(p-oxybenzoic acid), 1,5-naphthalene dicarboxylic acid, 2,6-naphthalene dicarboxylic acid, 2,7-naphthalene dicarboxylic acid, phenanthralene dicarboxylic acid, anthralene dicarboxylic acid, $4,4^1$-sulphenyl dibenzoic acid, and also alkyl derivatives with 1-12 carbon atoms in the alkyl group and/or ring substitution derivatives thereof, such as halogen derivatives, alkoxy and/or aryl derivatives. Alternatively, use may be made of hydroxy acids such as p-($\beta$-hydroxyethoxy)-benzoic acid, providing an aromatic dicarboxylic acid is also present.

Aromatic dicarboxylic acids are a preferred class for the preparation of polyester built up from ester units of the formula:

$$-ODO\overset{O}{\overset{\|}{C}}R\overset{O}{\overset{\|}{C}}-$$

Preferred aromatic acids are those having 8-16 carbon atoms, more particularly phenylene dicarboxylic acids, i.e., phthalic acid and isophthalic acid.

It has been found that especially favourable results can be obtained when the polyester of the formula

$$-ODO\overset{O}{\overset{\|}{C}}R\overset{O}{\overset{\|}{C}}-$$

is polyethylene terephthalate in which up to 15% of the terephthalic acid has been replaced with isophthalic acid. It is possible to affect the hardness, the rate of crystallization, the glass transition temperature, and the melting point of the polyester of the formula

$$-ODO\overset{O}{\overset{\|}{C}}R\overset{O}{\overset{\|}{C}}-$$

by replacing part of the terephthalic acid with isophthalic acid. It may be pertinent to note here that it is

possible to employ a similar polyester (PET in which about 2-3% of the terephthalic acid has been replaced with isophthalic acid) as is used in the manufacture of polyester bottles.

This polymer generally has a relative viscosity (measured on a solution of 1 g of polymer in 100 ml of m-cresol at 25° C) of 1,5 to 2,1 or higher. Alternatively, it is possible to employ regenerated PET or, optionally, waste PET released in tube extrusion.

Particularly when only the homopolymer PET is available, problems may arise as a result of a too high modulus, hardness, and the like. To overcome such a problem the invention provides a polyester composition into which have been incorporated up to 50% by weight of a polyester or polyester amide having a melting point of at most 100° C. The manner in which low-melting polyesters or polyester amides can be obtained is analogous to that for high-melting polyesters and known in itself, e.g. polycondensation of polyfunctional, preferably bifunctional alcohols, amino alcohols, hydroxycarboxylic acids, lactones, aminocarboxylic acids, cyclic carbonates, or polycarboxylic acids.

Every desired molecular weight, number, and type of end groups can be obtained by selecting the appropriate mixing ratio of the above-mentioned components.

As examples may be mentioned polyesters composed of adipic acid and ethylene glycol, butane diol, pentane diol, hexane diol, mixtures of ethylene glycol and propylene glycol, hexane diol, and methyl hexane diol, hexane diol and 2,2-dimethyl-1,3-propane diol, or polyester amides composed of hexane diol and piperazine. Alternatively, other glycols, such as 1,3- or 1,4-cyclohexane diol, or 1,3- or 1,4-bishydroxymethyl cyclohexane, amino alcohols, such as amino ethanol or amino propanol, can be incorporated into the low-melting polymers.

Also, the low-melting polymers may be composed wholly or in part of lactones, such as caprolactone or butyrolactone that may be substituted or not. Preference is given in this case to the use of polycaprolactone. Further examples of dicarboxylic acids fom which the low-melting polymers may be derived include: glutaric acid, pimelic acid, suberic acid, isosebacic acid, or ricinoleic acid. Aliphatic dicarboxylic acids with hetero atoms such as thiodipropionic acid also may be used. In addition there may be mentioned cycloaliphatic dicarboxylic acids, such as 1,3- or 1,4-cyclohexane dicarboxylic acid, and terephthalic acid and isophthalic acid.

Into the compositions according to the present invention to be used as adhesive there may be incorporated to a limited extent yet other compounds or polymers in addition to the low-melting polyesters or polyester amides. Mentioned may be, int. al., polyether esters derived from polyalkylene oxide glycols of a molecular weight of 600 to 4000 and high-melting as well as low-melting polyesters. Examples of suitable polyalkylene oxide glycols include polyethylene oxide glycol and polytetramethylene oxide glycol.

It has been found that an adhesive having very favourable properties can be obtained when the polyester composition is composed for 70-100 parts by weight of polyethylene terephthalate in which up to 15% of the terephthalic acid have been replaced with isophthalic acid, and for 0 -30 parts by weight of polycaprolactone.

In preparing the adhesives according to the present invention it is possible for the aluminium compound to be incorporated into the polyester melt, with vigorous stirring, following the polycondensation reaction.

However, preference is given to a preparative process in which the aluminium compound together with one or more thermoplastic polyesters and, optionally, other additives, such as pigments, stabilizers, antioxidants, and the like is mixed in an extruder. The temperature in the extruder in this process will as a rule - depending on the melting point of the polyester composition - be in the range of 200-320° C, preference being given to a temperature in the range of 280-320° C also on account of the residence time. The residence time in the extruder in this process will generally be in the range of 0,5-20 minutes and, in actual practice, in the range of 1-5 minutes.

The adhesives according to the present invention are pre-eminently suited to be used as an adhesive layer between a film of a thermoplastic synthetic material having a softening or melting point of at least 200° C and a film based on an ethylene-vinyl alcohol copolymer (EVOH). Especially suited to be used are films of thermoplastic synthetic materials based on polyarylates, polycarbonates, liquid crystalline polyesters, and aromatic polyesters such as (co)polyesters of polyalkylene terephthalate.

EVOH is a collective term for random copolymers of ethylene, vinyl alcohol and, optionally, yet a third monomer, such as an α-olefin or N-vinyl pyrrolidone. Examples of suitable α-olefins include butylene and propylene. The EVOH polymers are generally obtained from 20-55 moles of ethylene, 80-45 mole% of vinyl acetate, and 0-5 mole% of a third monomer, such as an α-olefin or N-vinyl pyrrolidone. The vinyl acetate units are at least 90%, preferably 99% saponified. The EVOH generally has an intrinsic viscosity of 0,7-1,5 dl/g (measured at 30° C in a mixture consisting of 85 parts by weight of phenol and 15 parts by weight of water).

In the resulting laminated products the support layer will generally be formed by the thermoplastic

synthetic material having a softening or melting point of ≧ 200° C, the adhesive layer by the adhesive according to the invention, and the barrier layer by the ethylene-vinyl alcohol copolymer (EVOH).

The support layer is often in the form of a polyethylene terephthalate film in which up to 15% of the terephthalic acid may have been replaced with isophthalic acid.

The laminated products according to the invention are especially suited to be used for the manufacture therefrom of a container, with the materials forming the laminate being moulded by co-extrusion into a preform, and then, by blow moulding, into the desired container shape such as a bottle.

In addition to manufacture by blow moulding it is possible, making use of a laminated flat sheet according to the invention, to manufacture dishes or cups therefrom by thermoforming.

For most applications there will be a construction of five layers in the case of co-extrusion, with the two outer layers, both of which enclose an EVOH film covered on either side with adhesive, being composed of a film of thermoplastic synthetic material having a softening or melting point of ≧ 200° C.

The invention will now be further illustrated with reference to the following examples. Of course, these are embodiments not limitative of the invention.

Example I-1

A. Preparation of the aluminium compound.

0,1 mole of aluminium isopropoxide was dissolved in 100 ml of xylene of 100° C. Next, 0,3 moles of acetone were added and the mixture was stirred at 50° C. On conclusion of the reaction the temperature was raised to 120° C, whereupon the isopropyl alcohol and the xylene were distilled off.

B. Preparation of adhesive.

Granules of a polyethylene terephthalate in which 2% of the terephthalic acid had been replaced with isophthalic acid having a relative viscosity $\eta_{rel}$ = 1,56 (measured at 25° C on a solution of 1 g of polymer in 100 ml of m-cresol) were sprinkled with 1% by weight of a powder of aluminium tris(acetylacetonate), the preparation of which is given under A, and subsequently mixed and extruded in a twin-screw extruder at a temperature in the range of 280° to 290° C.

The average residence time in the extruder was 2-3 minutes. After cooling, the extrudate was processed into granules and dried in vacuo at a temperature in the range of 120° to 140° C.

C. Manufacture of laminated strips.

Next, the adhesive was tested by the manufacture by a three-layer strip extrusion process of laminates with on the outside two polyethylene terephthalate (PET) films or two polyethylene-vinyl alcohol (EVOH, 32 mole% of ethylene) films, and on the inside a layer containing adhesive. The PET (EVOH) was extruded with an extruder having a screw of 45 mm, the adhesive with one having a screw of 30 mm. The polymer streams were moulded into a strip of about 2 cm wide and 200 µm thick by an extrusion apparatus. In either case a transparent laminate was obtained that could be delaminated manually only with difficulty (EVOH) or not at all (PET).

Examples I-2 through I-11

The experiment of Example I-1 was repeated. except that the polyester composition and the concentration and type of aluminium compound, respectively, were altered as indicated below.

The results of the tests are given in the table below.

In the table PET-A has the meaning of the polyethylene terephthalate (PET) used in Example I.

PET-B ($\eta_{rel}$ = 1,75) stands for a PET in which 2% of the terephthalic acid has been replaced with isophthalic acid;

PET-C ($\eta_{rel}$ = 1,90) stands for a PET in which 10% of the terephthalic acid has been replaced with isophthalic acid;

AL-Z stands for aluminium tris(acetylacetonate)
Al-Y stands for aluminium dihydroxymonostearate
Al-X stands for aluminium tribenzoate

TABLE I

| Ex. # | comp. of adhesive | | wt.% | colour | 3-layer strip coextrusion adhesion to | |
|---|---|---|---|---|---|---|
| | PET type | Al compound | | | PET | EVOH |
| I-1 | PET-A | AL-Z | 1 | o/y | + + | + |
| I-2 | PET-B | Al-Z | 1 | o/y | + + | + |
| I-3 | PET-C | AL-Z | 1 | o/y | + + | + |
| I-4 | PET-B | AL-Z | 0,5 | y | + + | + |
| I-5*) | PET-B | Al-Y | 1 | n | + + | - |
| I-6*) | PET-B | Al-Y | 0,5 | n | + + | - |
| I-7*) | PET-C | Al-X | 0,5 | n | + + | - |
| I-8*) | PET-C | Al-X/Al-Z | 0,5/0,01 | p-y | + + | - |
| I-9*) | PET-C | Al-X/Al-Z | 0,5/0,02 | p-y | + + | - |
| I-10*) | PET-C | Al-X/Al-Z | 0,45/0,05 | y | + + | - |
| I-11*) | PET-C | Al-X/Al-Z | 0,4/0,1 | y | + + | ± |

*) for comparison
o/y orange/yellow
y yellow
n neutral
p-y pale yellow
+ + very strong adhesion
+ good adhesion
± mediocre adhesion
- poor adhesion

The results in the table above clearly show that in the three aluminium compounds tested only the application of Al-Z (according to the invention) yielded a satisfactory adhesive for EVOH.

Example II-1

The same adhesive as employed in Example I-2 was used for the manufacture of a laminated tube and bottle.

For the support layers use was made of polyethylene terephthalate in which 2% of the terephthalic acid had been replaced with isophthalic acid of a relative viscosity $\eta_{rel}$ = 2.13.

For the barrier layer use was made of an EVOH copolymer having an ethylene content of 32 mole. The polyethylene terephthalate was extruded using an extruder with a 90 mm screw, and the EVOH and the adhesive were each extruded individually using an extruder with a 45 mm screw. The resulting polymer streams were co-extruded into a 5-layer tube by a multi-layer extruder. The extrusion rate was 7 m/min. After it had been cooled, the tube was cut into sections of the following dimensions: length 131 mm, outer diameter 24,8 mm, wall thickness 3,5 mm, and inner diameter 17,8 mm.

The thickness of the outside PET layer was 1000 µ and that of the inside PET layer 2100 µ. The two adhesive layers were 75 µ thick. The EVOH layer had a thickness of 250 µ.

There were no signs of delamination either during manufacture or during storage. Nor was there question of delamination during the manufacture of preforms from the sections of tube.

After being heated to 110°C, the preforms were blow moulded into 1-1 bottles with a length of 265 mm and a diameter of 86 mm. No delamination was detected either during the blow moulding or a year's storage.

The permeability to oxygen of the multi-layer bottles was found to be higher by a factor of 10 than for a single-layer PET bottle of comparable dimensions.

Examples II-2 through II-12

Analogous to Example II-1 the adhesives tested in Examples I-1 through 1-11 were employed together with several other ones for the manufacture of 5-layer polyester bottles. In addition to the polyesters PET-B and PET-C used in the preceding examples three new polyesters were employed, viz.:
PET-G containing 2% of isophthalic acid and with $\eta_{rel}$ = 2,13,
PET-E containing 11% of isophthalic acid and with $\eta_{rel}$ = 1,90, and
PET-F containing 6% of isophthalic acid and with $\eta_{rel}$ = 1,92.

In addition to the already used aluminium compounds the following compounds were incorporated into the polyesters listed in the table below:
magnesium bis(acetyl acetonate) (Mg-W)
aluminium tris(t-butoxide) (Al-V)
aluminium tris(salicylate) (Al-U)

TABLE II

| Ex. # | comp. of adhesive | | wt.% | colour | 3-layer tube coextrusion adhesion (cutting) |
|---|---|---|---|---|---|
| | PET type | Al compound | | | |
| II-1 | PET-B | AL-Z | 0,5 | y | good |
| II-2 | PET-C | Al-Z | 1 | o/y | good |
| II-3 | PET-D | AL-Z | 1 | o/y | good |
| II-4 | PET-D | AL-Z | 0,5 | y | good |
| II-5 | PET-E | Al-Z | 1 | o/y | good |
| II-6 | PET-G | Al-Z | 1 | o/y | good |
| II-7 | PET-G | Al-Z | 0,5 | y | good |
| II-8*) | PET-B | Al-X | 0,75 | n;not clear | delamination |
| II-9*) | PET-B | Mg-W | 0,75 | y | delamination |
| II-10*) | PET-F | Al-X | 0,75 | n;not clear | delamination |
| II-11*) | PET-F | Al-V | 0,75 | n;not clear | delamination |
| II-12*) | PET-F | Al-U | 0,75 | n;not clear | delamination |

*) for comparison

The results in the table above clearly show that aluminium compounds having ligands which do not display keto-enol tautomerism do not give serviceable adhesives. Nor does the magnesium compound containing a ligand displaying keto-enol tautomerism yield an adhesive with sufficient adhesion.

Examples III-1 through III-12

The examples below serve to show that instead of exclusively employing a copolymer of ethylene terephthalate, it is also possible to use a mixture thereof with a polyester or polyamide having a melting point ≦ 100 °C.

Incorporated into Table III below are results for using mixtures containing polycaprolactone (PCl).

TABLE III

| Ex. # | composition of adhesive | | | | clarity | colour | degree of adhesion of coextrusion | | |
|---|---|---|---|---|---|---|---|---|---|
| | PET type | PCl wt.% | Al cmp. | | | | 3-layer strip | | 5-layer tube |
| | | | type | wt.% | | | PET | EVOH | |
| III-1 | PET-A | 10 | Al-Z | 1 | T | o/y | + + | + | good |
| III-2 | PET-B | 10 | Al-Z | 1 | T | o/y | + + | + | |
| III-3 | PET-C | 10 | AL-Z | 1 | T | o/y | + + | + | |
| III-4 | PET-B | 10 | AL-Z | 0,5 | T | y | + + | + | |
| III-5 | PET-B | 20 | Al-Z | 0,5 | T | y | + + | + | |
| III-6 | PET-B | 30 | Al-Z | 0,5 | T | y | + + | + | |
| III-7*) | PET-B | 10 | Al-Z | 0,25 | O | y | + + | ± | |
| III-8*) | PET-B | 10 | Al-Z | 0.10 | O | p-y | + + | - | |
| III-9*) | PET-B | 20 | Al-Y | 1 | O | w | | | |
| III-10*) | PET-B | 10 | Al-X | 0,75 | O | w | | | |
| III-11*) | PET-B | 10 | Mg-W | 0,75 | O | br | | | delamin. |
| III-12*) | PET-B | 10 | | | O | w | + + | | |

*) for comparison
T transparent
O opaque
o/y orange/yellow
y yellow
p-y pale yellow
br brown
w white

The results in the table above clearly show that the adhesives according to the invention--provided that they were present in a sufficient amount--gave rise to the formation of satisfactorily adhesive, transparent, and virtually clear laminates.

Examples IV-1 through IV-9

Dried granules of PET-B and polycaprolactone were mixed in a weight ratio of 70:30. coated with the amounts of Al-Z, Al-T, and Al-S indicated in Table IV, and then extruded with a Berstorff ZE 25 twin-screw extruder at a temperature of 285°-295°C and an average residence time of 2-4 minutes.

A different fraction was extruded with a Werner & Pfleiderer ZSK 30 twin-screw extruder which was also equipped with a static mixer, thus extending the average residence time to about 10 to 15 minutes at an extrusion temperature of about 280°C. The results of the tests are given in Table IV.

TABLE IV

| Ex. # | composition of adhesive | | | | clarity | colour | extruder |
|---|---|---|---|---|---|---|---|
| | PET type | PCl wt.% | Al cmp. | | | | |
| | | | type | wt.% | | | |
| IV-1 | PET-B | 30 | AL-Z | 0,5 | T | y | ZE 25 |
| IV-2*) | PET-B | 30 | Al-T | 0,5 | O | p-y | ZE 25 |
| IV-3*) | PET-B | 30 | AL-S | 0,5 | O | w | ZE 25 |
| IV-4 | PET-B | 30 | AL-Z | 1 | T | o/y | ZE 25 |
| IV-5*) | PET-B | 30 | Al-T | 1 | O | w | ZE 25 |
| IV-6*) | PET-B | 30 | Al-S | 1 | O | w | ZE 25 |
| IV-7*) | PET-B | 30 | Al-S | 2 | O | p-y | ZE 25 |
| IV-8 | PET-B | 30 | Al-Z | 0,5 | T | o | ZSK |
| IV-9*) | PET-B | 30 | Al-S | 1 | O | p-y | 30/mixer |

*) for comparison

The results in the table above clearly show that a transparent film could be obtained only by using the adhesive according to the invention.

Examples V-1 through V-6

In a manner analogous to that indicated in Example I-1 for Al-Z the following aluminium compounds were prepared:

| | |
|---|---|
| aluminium bis(acetylacetonate)acetate | Al-R |
| aluminium (acetylacetonate)diacetate | Al-Q |
| aluminium triacetate | Al-P |
| aluminium bis(ethyl acetoacetate)acetate | Al-N |

The above aluminium compounds, and also Al-Z and Al-T, were used to coat dry mixtures of granules of 70 parts by weight of PET-B and 30 parts by weight of polycaprolactone (PCl), whereupon the whole was extruded using a Werner & Pfleiderer ZE 25 extruder at a temperature of 290 °C and a residence time of 3 minutes.

The results of the experiments are given in Table V below.

TABLE V

| Ex. # | composition of adhesive | | | | clar. | colour | $T_{rc}$ (°C) | $T_m$ (°C) | adhesion to EVOH T-peel test (N.m) |
|---|---|---|---|---|---|---|---|---|---|
| | PET type | PCI wt.% | Al cmp. | | | | | | |
| | | | type | wt.% | | | | | |
| V-1 | PET-B | 30 | AL-Z | 1,0 | T | o·y | 144 | 219 | 65 |
| V-2 | PET-B | 30 | Al-R | 1,0 | T | o·y | 152 | 224 | 42 |
| V-3 | PET-B | 30 | AL-Q | 1,0 | T | y | 175 | 233 | 20 |
| V-4*) | PET-B | 30 | AL-P | 1,0 | O | p-y | 194·29 | 54·246 | < |
| V-5 ) | PET-B | 30 | Al-N | 1,0 | T | o·y | 160 | 230 | 35 |
| V-6*) | PET-B | 30 | Al-T | 1,0 | O | w | 181 29 | 54·247 | < |

*) for comparison
< below limit of measurement

The DSC measurement results in the table above clearly show that the product which contained Al-Z had a far lower $T_{rc}$ (recrystallization temperature) and $T_m$ (melting point) than the other mixtures which contained fewer ligands displaying keto-enol tautomerism or none whatsoever. It was found that the samples prepared according to the Comparative Examples V-4 and V-6 were not in any way transesterified after a single extruding pass, as is shown by the individual $T_{rc}$ and $T_m$ values measured for both PCI and PET-B.

Adhesion tests carried out with a laminate containing EVOH films produced an adhesion result directly proportional to the degree of transesterification and the percentage of ligand displaying keto-enol tautomerism.

Example VI

In a manner analogous to that indicated in Example I-1 a laminated strip was manufactured, except that this time the films on the outside were of bisphenol-A polycarbonate.

The adhesion of the PET-A modified with Al-Z to the polycarbonate films was such that they could no longer be separated manually.

## Claims

1. An adhesive based on a thermoplastic polyester composition and an organo-aluminium compound, characterized in that the aluminium compound is an aluminium chelate with at least one ligand displaying keto-enol tautomerism, which compound is melt incorporated into the polyester in an amount of 0,2 to 5% by weight, calculated on the polyester composition-aluminium compound combination.

2. An adhesive according to claim 1, characterized in that 0,3 to 3% by weight of the aluminium compound is melt-incorporated into the polyester composition.

3. An adhesive according to claim 1, characterized in that 0.5 to 1.5% by weight of the aluminium compound is melt-incorporated into the polyester composition.

4. An adhesive according to claim 1, characterized in that the aluminium compound is an aluminium acetylacetonate.

5. An adhesive according to claim 4, characterized in that the aluminium compound is aluminium tris-(acetylacetonate).

6. An adhesive according to claim 1, characterized in that the aluminium compound is aluminium acetate bis(ethyl acetoacetate).

7. An adhesive according to claim 1, characterized in that the thermoplastic polyester composition consists for 50-100% by weight of a polyester of the formula:

$$-ODO\overset{\overset{O}{\|}}{C}R\overset{\overset{O}{\|}}{C}-$$

wherein D respresents a divalent radical left after removal of terminal hydroxyl groups from at least one diol having a molecular weight of less than 250, R represents a divalent radical left after removal of carboxyl groups from at least one carboxylic acid having a molecular weight of less than 300, at least 70 mole % of the used dicarboxylic acid is terephthalic acid or the ester-forming equivalents thereof, and at least 70 mole % of the diol is ethylene glycol, 1,3-or propane diol or 1,4-butane diol, or the ester-forming equivalents thereof, and the sum of the mole percentages of the dicarboxylic acid which is not terephthalic acid or an ester-forming equivalent thereof and of the diol which is not ethylene glycol, 1,3- propane diol or 1,4-butane diol, or an ester-forming equivalent thereof does not exceed 30.

8. An adhesive according to claim 7, characterized in that the polyester of the formula

$$-ODO\overset{\overset{O}{\|}}{C}R\overset{\overset{O}{\|}}{C}-$$

is polyethylene terephthalate in which up to 15% of the terephthalic acid has been replaced with isophthalic acid.

9. An adhesive according to claim 7, characterized in that the thermoplastic polyester composition is composed for 0-50% by weight of a polyester or polyester amide having a melting point $\leq 100^{\circ}C$.

10. An adhesive according to claim 9, characterized in that the polyester having a melting point of $\leq 100^{\circ}C$ is polycaprolactone.

11. An adhesive according to claim 9, characterized in that the polyester composition is composed for 70-100 parts by weight of polyethylene terephthalate in which up to 15% of the terephthalic acid has been replaced with isophthalic acid, and for 0-30 parts by weight of polycaprolactone.

12. Use of the adhesive according to one or more of the preceding claims as adhesive layer between a film of a thermoplastic synthetic material having a softening or a melting point of $\geq 200^{\circ}C$ and a film based on an ethylene-vinyl alcohol copolymer.

13. A laminated product consisting of a support layer of a thermoplastic synthetic material having a softening or melting point of at least $200^{\circ}C$, an adhesive layer composed wholly or substantially of an adhesive according to one or more of the claims 1-11, and a barrier layer based on an ethylene-vinyl alcohol copolymer.

14. A process for the manufacture of a laminated product according to claim 13 in the form of a container, with the materials forming the laminate being moulded by co-extrusion into a preform, and then, by blow moulding or thermoforming, into the desired container shape.

15. A container in the form of a bottle obtained by the process according to claim 14.

16. A container in the form of a dish or a cup obtained by the process according to claim 14.

European Patent Office

# EUROPEAN SEARCH REPORT

Application Number

EP 90 20 1214

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 112 718 (KURARARY CO., LTD.)<br>* claims *<br>--- | 1 | C 09 J 167/00<br>C 08 K 5/00<br>C 08 L 67/00<br>B 32 B 27/36 |
| A | DE-B- 943 380 (CHEMISCHE WERKE ALBERT)<br>* the whole document *<br>--- | 1 | |
| A | DATABASE WPIL, no. 87-247047, Derwent Publica & JP-A-62 169 857 (IDEMITSU PETROCHEM CO., LTD.) 27-07-1987<br>* abstract *<br>--- | 1 | |
| A | CHEMICAL ABSTRACTS, vol. 106, no. 16, 20 April 1987 Columbus, Ohio, USA & JP-A-61 190 344 (Toray Indust ries, Inc.) 25-08-1986<br>* abstract *<br>--- | 1 | |
| A | CHEMICAL ABSTRACTS, vol. 99, no. 22, 28 November 1983 Columbus, Ohio, USA & JP-A-58 059 269 (Toshiba Corp. Showa electric Wire and Cable Co., Ltd.)<br>* abstract *<br>----- | 1 | **TECHNICAL FIELDS SEARCHED (Int. Cl.5)**<br>C 09 J<br>C 08 K<br>C 08 L<br>B 32 B |

The present search report has been drawn up for all claims

| Place of search | Date of completion of the search | Examiner |
|---|---|---|
| THE HAGUE | 13-08-1990 | DE LOS ARCOS Y VELAZQUEZ |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document